# EUROPÄISCHE PATENTSCHRIFT

(11) **EP 1 289 037 B1**
(45) Veröffentlichungstag und Bekanntmachung des Hinweises auf die Patenterteilung: **01.08.2007**
(21) Anmeldenummer: 02017267.2
(22) Anmeldetag: 01.08.2002
(51) Int. Cl.: H01M 8/10, H01M 8/02

(54) **Dichtungsaufbau für eine MEA und Verfahren zur Herstellung des Dichtungsaufbaus**
Seal assembly for a MEA and method for manufacturing the seal assembly
Assemblage d'étanchéité pour un MEA et méthode de fabrication de l' assemblage d'étanchéité

(30) Priorität: 24.08.2001 DE 10140684
(43) Veröffentlichungstag der Anmeldung: 05.03.2003
(73) Patentinhaber: DaimlerChrysler AG, 70327 Stuttgart (DE)
(72) Erfinder: Biegert, Hubertus, 78089 Unterkirnach (DE); Toth, Gabor, 89257 Illertissen-Jedesheim (DE)

(56) Entgegenhaltungen:
- WO-A-01/29921
- WO-A-97/23916
- WO-A-98/33225
- DE-A- 1 510 044
- US-A- 3 522 095
- US-A- 5 910 378
- US-A- 5 945 192
- US-A- 6 159 628
- PATENT ABSTRACTS OF JAPAN vol. 1999, no. 05, 31. Mai 1999 (1999-05-31) -& JP 11 045729 A (FUJI ELECTRIC CO LTD), 16. Februar 1999 (1999-02-16)

## Beschreibung

Die vorliegende Erfindung betrifft ein Verfahren zur Herstellung einer Membran-Elektroden-Einheit (MEA) für eine Brennstoffzelle nach dem Oberbegriff des Patentanspruchs 1.

Aus der DE 298 11 922 U1 ist eine Brennstoffzelle mit zwei äußeren Platten und einer zwischen diesen Platten angeordneten, von Elektroden und wenigstens einem zwischen den Elektroden angeordneten Feststoffelektrolyten gebildeten Elektroden-Feststoffelektrolyt-Anordnung bekannt, wobei die äußeren Platten mit ihrem Rand über die Elektroden- und Feststoffelektrolyt-Anordnung vorstehen, und wobei der diese Anordnung umschließende, zwischen den äußeren Platten gebildete Raum mit einer von einer aushärtbaren Dichtungsmasse gebildeten Dichtung ausgefüllt ist. Das Kunststoffmaterial bildet nach dem Aushärten zwischen den äußeren Platten einen den Innenraum der Brennstoffzellen nach außen hin gasdicht abschließenden und auch die Elektroden-Feststoffelektrolyt-Anordnung zusätzlich fixierenden Rahmen.

Aus der DE 195 42 475 A1 ist eine PEM-Brennstoffzelle mit Verteilerplatten aus einem elastischen, plastisch verformbaren Material bekannt, welche integrierte Gas- bzw. Flüssigkeitskanäle aufweisen. Um die einzelnen Gas- bzw. Flüssigkeitsräume gegeneinander abzudichten, sind in den Verteilerplatten integrierte Erhebungen vorgesehen. Diese Erhebungen werden durch einen Prägevorgang hergestellt, wobei das verwendete Prägewerkzeug entsprechende Erhebungen zur Ausbildung der Gas- bzw. Flüssigkeitskanäle und entsprechende Vertiefungen zur Ausbildung der Dichtungsanordnung aufweist.

Polymerelektrolytmembran-Brennstoffzellen bestehen aus einer Anordnung mehrerer, durch Bipolarplatten getrennter Membran-Elektroden-Einheiten, einem so genannten Stack, wobei die Membran-Elektroden-Einheiten (MEA) wiederum aus zwei katalytisch aktiven Elektroden zur elektrochemischen Umsetzung der chemischen Substanzen sowie einem ionenleitenden Elektrolyten zwischen den Elektroden zum Ladungstransport aufgebaut sind. Die Bipolarplatten dienen der Trennung der Gasräume und der elektrischen Verknüpfung der Einzelzellen. Die funktionellen Anforderungen einer derartigen Verbundkonfiguration sind eine gas- und feuchtigkeitsundurchlässige Abdichtung zwischen den Brennstoffzellenstapeln, wodurch zum einen der Verlust an Arbeitsgasen und zum anderen die Verdampfung von Wasser und die daraus resultierende Austrocknung der Polymerelektrolytmembran verhindert wird. Das Abdichten des Gasraums zwischen den beiden Bipolarplatten und den Membran-Elektroden-Einheiten ist schwierig, da die oberen Schichten der MEA aufgrund ihrer Funktion porös ausgebildet sind.

Beim Zusammenbau von Brennstoffzellen neigen die Polymer-Elektrolytmembranen dazu, aufgrund der direkten Handhabung durch Staub und ähnliches verunreinigt zu werden. Staub, aber auch wechselnde Luftfeuchtigkeit bei der Lagerung beeinflussen die stromerzeugende Leistungsfähigkeit der Brennstoffzelle.

Die japanische Patentanmeldung JP 11-045729 A beschäftigt sich mit der Problematik des möglichst einfachen Zusammensetzens einer Brennstoffzelle. Dazu schlägt sie ein Verfahren zur Herstellung einer MEA für eine Brennstoffzelle, enthaltend eine Schichtanordnung aus einer Anoden-Elektrode, einer Kathoden-Elektrode und einer dazwischen angeordneten Membran vor, bei dem zuerst eine katalysatorbeschichtete Polymerelektrolytmembran und eine Polymerfolie durch Wärmekompression miteinander verbunden und danach geschnitten werden, um eine MEA zu bilden.

Vor diesem Hintergrund ist es Aufgabe der vorliegenden Erfindung, ein Verfahren anzugeben, mit dem nach außen hin gasdicht abgedichtete MEAs auf möglichst einfache Weise hergestellt werden können.

Zur Lösung dieser Aufgabe sieht die vorliegende Erfindung ein Verfahren zur Herstellung einer Membran-Elektroden-Einheit für eine Brennstoffzelle mit den kennzeichnenden Merkmalen des Anspruchs 1 vor. Vorteilhafte Ausgestaltungen des erfindungsgemäßen Verfahrens sind Gegenstand der Unteransprüche und der Beschreibung.

Die Erfindung wird nun anhand der beigefügten Zeichnungen weiter beschrieben. In dieser zeigt
- Fig. 1: eine schematische Darstellung einer Schichtanordnung mit Folien auf der Ober- und Unterseite der Anordnung in einer Schnittdarstellung
- Fig. 2 a: eine schematische beispielhafte Darstellung der Befestigung der Folie am äußersten Rand der Schichtanordnung in einer Schnittdarstellung

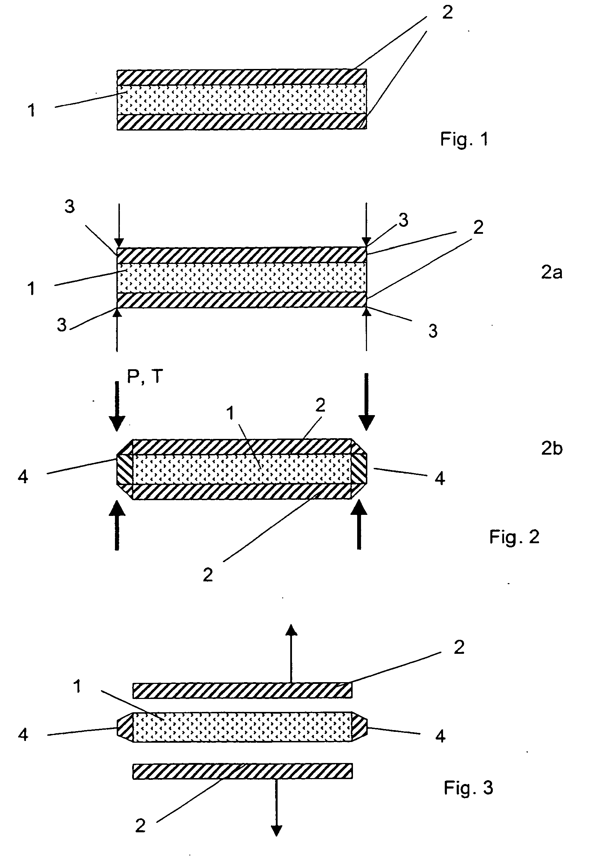

- Fig. 2 b: eine schematische beispielhafte Darstellung eines Press- und Siegelvorgangs in einer Schnittdarstellung
- Fig. 3: eine bevorzugte Ausführung einer Absaugung der überflüssigen Folie in einer Schnittdarstellung

In Fig. 1 ist eine bevorzugte Membran-Elektroden-Einheit in einem Zwischenschritt des erfindungsgemäßen Verfahrens dargestellt. Eine Schichtanordnung 1 ist beiderseits mit einem Polymermaterial 2 bedeckt. Das erfindungsgemäße Verfahren nach Anspruch 1 ist in Fig. 2 a, 2 b und Fig. 3 erläutert.

Das Verfahren zur Herstellung einer Polymerelektrolytmembran-Elektroden-Einheit für eine Brennstoffzelle gemäß Anspruch 1, enthaltend eine Schichtanordnung 1 aus einer Anoden-Elektrode, einer Kathoden-Elektrode und einer dazwischen angeordneten Polymerelektrolytmembran, beinhaltet dabei folgende Schritte:
a) Herstellung der Polymerelektrolytmembran-Elektroden-Einheit durch Zusammenfügen der Polymerelektrolytmembran und der Kathoden- und Anoden-Elektrode, wobei eine Katalysatorschicht membran- oder elektrodenseitig aufgebracht wird, und insgesamt die Schichtanordnung 1 gebildet wird,
b) Aufbringen eines Polymermaterials 2 in Form von Folien auf die Ober- und Unterseite der Schichtanordnung 1,
c) Ausstanzen und gleichzeitiges Befestigen der Folie 2 mindestens teilweise am äußersten Rand 3 der Schichtanordnung 1, wie in Fig. 2 a durch Pfeile angedeutet,
d) Erhitzen und Pressen von Randzonen 4 der folienbeschichteten Schichtanordnung 1 durch Einwirken von Druck p und Temperatur T, wie in Fig. 2 b durch Pfeile angedeutet, wobei das Polymermaterial in den Randzonen erweicht oder schmilzt und die Randzonen 4 oder Randbereiche der Schichtanordnung 1 durchdringt.

Anschließend wird der Teil der nicht benötigten bzw. nicht erhitzten Folie 2 der von den Randzonen 4 umschlossenen Flächen der Schichtanordnung entfernt, vorzugsweise abgesaugt, wie in Fig. 3 dargestellt. Die nun freiliegenden Flächen der Schichtanordnung bilden die späteren aktiven Flächen der MEA. Die von den Randzonen 4 umschlossenen Flächen werden gebildet aus den mit Polymermaterial in Form von Folie überdeckten, nicht mit Polymermaterial gasdicht versiegelten MEA-Flächen.

Die generelle Herstellung der Schichtanordnung 1 kann beispielsweise der nicht vorveröffentlichten Patentanmeldung DE 10052224.6 oder der ebenfalls nicht vorveröffentlichten Patentanmeldung DE 10124272.7 entnommen werden. Eine bevorzugte Membran-Elektroden-Einheit selbst umfasst mindestens eine Gasdiffusionschicht, mindestens eine Carbonbasenschicht, mindestens eine Katalysatorschicht und mindestens eine Polymerelektrolytmembranhaltige Schicht. Als ein Beispiel kann der generelle Aufbau der nicht vorveröffentlichten Patentanmeldung DE 10052224.6 entnommen werden. Andere MEA-Zusammensetzungen sind jedoch ebenso möglich.

Bei der Weiterverarbeitung der so hergestellten Schichtanordnung wird vorzugsweise nicht nur die Schichtanordnung 1, sondern auch das Polymermaterial 2 in Folienform als Rollenware verarbeitet, wobei beide Bahnen bevorzugt dieselbe Breite aufweisen. Zur Herstellung eines Verbundes von Schichtanordnung 1 mit dem Polymermaterial 2 wird über und unter der noch ungeschnittenen Schichtanordnungs-Bahn 1 jeweils eine entsprechende Kunststoff-Folienbahn 2 kontinuierlich zugeführt. Hiermit wird das Polymermaterial in Form von Folien auf die Ober- und Unterseite der Schichtanordnung aufgebracht. Dieser Verbund wird mit entsprechend erhitzten und geformten Stanzwerkzeugen ausgestanzt. Hierbei werden die Stanzmesser, deren Schneidkante dem jeweils auszustanzenden Profil entspricht, in einer Ausführungsform mittels Heizvorrichtung erwärmt, wobei günstigerweise die Temperatur des Messers mit Hilfe eines elektrischen Reglers stufenlos regelbar ist. Dabei wird der Verbund aus mehreren Werkstofflagen entlang der Schneidkante des Stanzmessers umfangsgeschweißt. Zusätzlich zum Stanzmesser kann auch der zu verarbeitende Verbund von Schichtanordnung und Polymermaterial erwärmt werden. Als ein Beispiel eines Stanzwerkzeugs sei hier die Offenlegungsschrift DE 195 21 359 genannt.

In einer anderen Ausführungsform wird der an der Schneidkante anliegende Werkstoffverbund durch das an den Schneidkanten des Stanzmessers erzeugte Hochfrequenzfeld entlang der Schneidkante des Stanzmessers umfangsgeschweißt, d.h. die einzelnen Lagen des Verbundes werden an ihren äußersten Rändern miteinander verbunden. Bei diesem Verfahren ist das Messer zusätzlich heizbar. Beispielhaft sei für diese Ausführungsform die Offenlegungsschrift DE 1 510 044 genannt.

Weisen die als Rollenware zu verarbeitenden MEA- und Polymermaterialbahnen dieselbe Breite auf und schließen MEA und Kunststoff-Folie an ihren Stanzkanten bündig miteinander ab, so findet die während des Stanzens stattfindende Befestigung der Lagen untereinander an ihren äußersten Rändern statt und verbinden damit die MEA-Lage und die darüber und darunter befindliche Folienlagen an ihrem äußersten Rand miteinander.

Weisen die als Rollenware zu verarbeitenden MEA- und Polymermaterialbahnen unterschiedliche Breite auf, so werden an zwei gegenüberliegenden Seiten des Verbundes in Laufrichtung der Bahnen beim Stanzen an diesen Seiten nur Folien gestanzt und miteinander an ihrem äußersten Rand befestigt. Die Befestigung findet nicht an der MEA statt. Bei den beiden quer zur Laufrichtung liegenden Seiten des Verbundes jedoch schließen MEA und Kunststoff-Folienbahnen an ihren Stanzkanten bündig miteinander ab.

Es liegt nun eine mit einer Schutzfolie 2 umhüllte, mindestens teilweise am äußersten Rand 3 befestigte, einfach weiterverarbeitbare Schichtanordnung 1 vor. Die nachfolgenden Arbeitsschritte können sofort anschließend an diesen Verfahrensschritt oder nach Bedarf nach Lagerung erfolgen.

Aufgrund der die Schichtanordnung 1 umgebenden Schutzfolie 2, die als Schutzhülle fungiert, wird die Schichtanordnung 1 für mechanische Greifer, Rüttelsortierer oder Transportbänder handhabbar, ohne daß sie durch nachfolgende Arbeitsprozessschritte mechanisch beschädigt werden kann. Die Schutzhülle verhindert außerdem vorteilhafterweise eine Verschmutzung der empfindlichen Schichtanordnung 1 bei der Weiterverarbeitung. Eine unterschiedliche Luftfeuchtigkeit während der Lagerzeit oder der nachfolgenden Verarbeitung haben ebenfalls keinen Einfluß mehr auf die Leistungsfähigkeit der Schichtanordnung 1. Die so geschützte Schichtanordnung 1 kann beliebig lange gelagert werden. Ferner hat das durch die obengenannten Verfahren beschriebene Ausstanzen und gleichzeitiges Befestigen der Folie 2 mindestens teilweise am äußersten Rand der Schichtanordnung 1 den Vorteil, daß die für das Stanzen und Schweißen benötigte Zeit deutlich reduziert werden kann und somit hohe Stückzahlen und geringe Taktzeiten erlaubt, zum anderen führt dieses Vorgehen zu einem qualitativ einheitlicheren Produkt.

Da das zur Abdichtung verwendete Polymermaterial 2 im Gegensatz zum üblicherweise verwendeten Silikonmaterial billiger ist, entstehen außerdem geringere Dichtungsmaterialkosten und der Abfall ist zu 100% recyclebar. Der Vorteil des bevorzugt thermoplastischen Folienmaterials 2 gegenüber anderen Werkstoffen, die noch ausgehärtet oder vernetzt werden müssen, ist seine einfache Handhabung verbunden mit einer Schutzwirkung bezogen auf die Schichtanordnung 1 durch die noch nicht entfernte Schutzfolie 2, vor Staub und/oder mechanischen Beschädigungen während der Lagerung bzw. vor der Weiterverarbeitung.

Der nächste Arbeitsschritt umfasst eine Membran-Elektroden-Einheit, die eine Schichtanordnung 1 aus einer Anoden-Elektrode, einer Kathoden-Elektrode und einer dazwischen angeordneten Membran umfasst, bei der die Randzonen 4 oder Randbereiche der Schichtanordnung 1 durch ein dort aufgebrachtes und in die Randzonen 4 eingedrungenes Polymermaterial 2 gegen die Umgebung und die Arbeitsgase abgedichtet sind. Wie in Fig. 2 b als eine mögliche Ausführungsform angedeutet, wird die mit der Schutzhülle versehene Schichtanordnung 1 in eine nicht dargestellte Presse eingelegt. Durch Erhitzen und Pressen der Randzonen 4 der folienbeschichteten Schichtanordnung 1 erweicht oder schmilzt das in der Randzone 4 befindliche Polymermaterial 2 und durchdringt die Randzonen 4 der Schichtanordnung 1. Das so geschmolzene oder erweichte Material dringt auf beiden Seiten durch die poröse Schicht bis zur Polymerelektrolytmembran vor. Dieser Prozeß wird auch als Saturierung bezeichnet. Innerhalb von Sekunden wird so der Randbereich im Umfang der Schichtanordnung gasdicht versiegelt. Die nicht mehr benötigte bzw. nicht erhitzte Folie 2, die innerhalb der versiegelten Randzonen 4 liegt, wird entfernt, z.B. abgesaugt, wie in Fig. 3 beispielhaft dargestellt.

Die nun vorliegende umfangsversiegelte, in den Rändern gasdichte Membran-Elektroden-Einheit lässt sich nun auf einfache Art und Weise zwischen zwei Bipolarplatten einbauen, wobei zusätzliches Dichtungsmaterial noch vorgesehen werden kann. Bei der Verbindung der einzelnen Bauteile untereinander kann jedoch das verwendete zusätzliche Dichtungsmaterial vorteilhafterweise minimiert werden.

Je nach Breite und auch Dicke der gasdichten, mit Polymermaterial versiegelten oder saturierten Ränder können in den Ecken auch Löcher für die Durchführungsports der Arbeitsgase gestanzt werden. Dies hat den Vorteil, daß keine zusätzlichen Flächen oder anderweitige Verstärkungen an die MEA angeklebt werden müssen. Des Weiteren kann auf der nicht gesiegelten folienbeschichteten MEA-Fläche an bestimmten im Umfang begrenzten Flächen durch Heißpressen oder Heißsiegeln vorzugsweise mittels eines Stempels während des Verfahrensschrittes d eine punktuelle Verstärkung auf der MEA erreicht werden, um an dieser Stelle zusätzlich zu den vorhandenen in den Ecken befindlichen Durchführungsports Gase einzuleiten. Treffen die Arbeitsgase von hinten mit hohem Partialdruck auf die MEA auf, treten Hot Spots auf der Membran auf, die zu einem Durchbrennen an dieser Stelle führen können. Die an dieser Stelle auf der MEA auftreffenden, von der Bipolarplatte kommenden, Arbeitsgase umströmen nun vorteilhafterweise diese Verstärkung und treffen somit mit vermindertem Partialdruck auf die nicht versiegelten, nicht mehr folienbeschichteten, reaktiven Flächen der MEA auf.

Als eine weitere Variante des Verfahrens gemäß Anspruch 1 können bei der Weiterverarbeitung der MEA nach Verfahrensschritt b auch die als Rollenware zu verarbeitenden MEA- und Polymermaterialbahnen eine zueinander unterschiedliche Breite aufweisen. Das Polymermaterial steht an den zur Laufrichtung befindlichen Rändern über. Dieser Unterschied der Kunststoff-Folienbahn in der Breite kann einige mm bis einige cm betragen. Die Folienbahn kann an ihren sich in Laufrichtung befindlichen Rändern ein Stanzprofil aufweisen. Das Ausstanzen und gleichzeitige Befestigen der Schichtanordnung mit dem Polymermaterial findet entlang der Schnittkante des Stanzeisens statt, wobei die beiden gegenüberliegenden, nicht überstehenden, sondern bündig miteinander abschließenden Ränder der folienbeschichteten MEA, die quer zur Laufrichtung angeordnet sind, am äußersten Rand der Schichtanordnung miteinander befestigt oder verbunden, bevorzugt mit einander verschweißt werden. Gleichzeitig werden die überstehenden Ränder der Kunststoff-Folienbahn, die sich in Laufrichtung der Bahnen befunden haben, an äußersten Ende ihrer Schnittkante miteinander befestigt oder verbunden, vorzugsweise verschweißt. Durch nachfolgendes Erhitzen und Pressen der Randzonen der folienbeschichteten Schichtanordnung, wobei das Polymermaterial in den Randzonen erweicht oder schmilzt, werden die mit der MEA bündig abschließenden Randzonen der Schichtanordnung durch das Polymermaterial durchdrungen, wobei die Randzonen der Schichtanordnung mit den überstehenden Folienrändern im Umfang ihrer überstehenden Folienränder miteinander verschweißt werden, wobei die Ränder der Schichtanordnung, die nicht bündig mit der Folienbahn abschließen, ebenso, an ihrem äußersten Rand vom Polymermaterial durchdrungen werden.
Hierbei können ebenfalls gleichzeitig oder im Anschluß an den Verfahrensschritt d, wie bereits beschrieben, punktuelle Verstärkungen innerhalb der MEA aufgebracht werden.

Die Auswahl von geeigneten Dichtungsmaterialien ist jedoch nicht unproblematisch. Das Material muß neben den geforderten Dichtungseigenschaften, wie z.B. Gas- und Wasserdampfbarriereeigenschaften, trockenen oder feuchten Arbeitsgasen wie z.B. Sauerstoff, Wasserstoff bei erhöhter Temperatur (ca. 120°C) in Dauerbelastung widerstehen, ohne daß eine Alterung des Dichtungsmaterials durch Versprödung oder Degradation oder gar eine Quellung eintritt, d.h. das Material muß zusätzlich hydrolysestabil sein. Die Verwendung von Materialien mit Zusatzstoffen wie z.B. Weichmachern führen im Laufe der Zeit dazu, daß sie aus dem Material ausdiffundieren und sich anderweitig ablagern oder den Katalysator vergiften, was zu einem vorzeitigen Ausfall des Systems führen kann.

Das Dichtungsmaterial ist bevorzugt thermoplastisch. Als thermoplastisches Polymer sind dabei nur solche geeignet, die den spezifischen Anforderungen in einer Wasserstoff-/Sauerstoff-Brennstoffzelle hinsichtlich der mechanischen und chemischen Forderungen genügen. Weiterhin ist gefordert, daß das thermoplastische Material, unter Beibehaltung aller vorgenannten Eigenschaften, bis mindestens 120°C stabil bleibt. Das Polymermaterial enthält als Basismaterial Polyethylen oder polyethylenhaltiges Material, Polypropylen oder polypropylenhaltiges Material, Polyester oder polyesterhaltiges Material, Polyamid oder polyamidhaltiges Material, Ethylen-Vinylalkohol oder ethylen-vinylalkoholhaltiges Material, Polyvinylidenchlorid oder polyvinylidenchloridhaltiges Material, Polyvinylchlorid oder polyvinylchloridhaltiges Material einzeln oder in Kombination und/oder Propf- und/oder Copolymerisate oder besteht daraus. Es ist jedoch auch möglich, das Polymermaterial so zu modifizieren, daß bestimmte für die Verarbeitung (z.B. Siegelfähigkeit) bzw. den Betrieb in einer Brennstoffzelle notwendigen physikalischen und/oder chemischen Eigenschaften realisiert werden können. Dies kann durch die chemische Modifikation des Basismaterials an sich geschehen und/oder durch die Zugabe von eigenschaftssteuernden Additiven oder Zusatzstoffen. Die an Barrierematerialien gestellten Anforderungen können sehr vielfältig sein. Die Forderungen können dahingehen, daß Barrieren gegen Stoffe mit vollkommen verschiedenen Eigenschaften erstellt werden müssen. Der geforderte Eigenschaftskatalog kann häufig nicht allein durch einen Werkstoff erreicht werden, so daß verschiedenartige Werkstoffe in Form von Verbunden kombiniert werden müssen. Folienverbunde für Brennstoffzellen müssen aus einer Kombination einer Feuchte- mit einer Gasbarriere aufgebaut sein. Beispielsweise bilden Polyolefine wie Polypropylen oder Polyethylen hierbei die Feuchtebarriereschicht und polare Materialien wie beispielsweise Polyamid, Ethylenvinylalkohol oder Polyester die Gasbarriere. Zwischen den meist unverträglichen Einzelschichten kommen dem Fachmann geläufige Haftvermittler zum Einsatz, die aufgrund ihrer chemischen Struktur eine ausreichende Affinität zu beiden Partnern besitzen.

## Patentansprüche

1. Verfahren zur Herstellung einer Polymerelektrolytmembran-Elektroden-Einheit für eine Brennstoffzelle, enthaltend eine Schichtanordnung (1) aus einer Anoden-Elektrode, einer Kathoden-Elektrode und einer dazwischen angeordneten Polymerelektrolytmembran,
beinhaltend folgende Schritte
a) Herstellung der Polymerelektrolytmembran-Elektroden-Einheit durch Zusammenfügen der Polymerelektrolytmembran und der Kathoden- und Anoden-Elektrode, wobei eine Katalysatorschicht membran- oder elektrodenseitig aufgebracht wird, und insgesamt die Schichtanordnung (1) gebildet wird,
b) Aufbringen eines Polymermaterials (2) in Form von Folien auf die Ober- und Unterseite der Schichtanordnung (1),
c) Ausstanzen und gleichzeitiges Befestigen der Folie (2) mindestens teilweise am äußersten Rand (3) der Schichtanordnung (1),
d) Erhitzen und Pressen von Randzonen (4) der folienbeschichteten Schichtanordnung (1), wobei das Polymermaterial in den Randzonen erweicht oder schmilzt und die Randzonen (4) der Schichtanordnung (1) durchdringt.

2. Verfahren nach Anspruch 1,
**dadurch gekennzeichnet,**
**daß** der Teil der nicht benötigten, nicht erhitzten Folie (2) von der von den Randzonen (4) umschlossenen Flächen der Schichtanordnung (1) entfernt wird.

3. Verfahren nach Anspruch 1,
**dadurch gekennzeichnet,**
**daß** das Befestigen der Folie (2) durch Hochfrequenz erfolgt.

4. Verfahren nach Anspruch 1,
**dadurch gekennzeichnet,**
**daß** ein Polymermaterial verwendet wird, daß als Basismaterial Polyethylen oder polyethylenhaltiges Material, Polypropylen oder polypropylenhaltiges Material, Polyester oder polyesterhaltiges Material, Polyamid oder polyamidhaltiges Material, Ethylen-Vinylalkohol oder ethylen-vinylalkoholhaltiges Material, Polyvinylidenchlorid oder polyvinylidenchloridhaltiges Material, Polyvinylchlorid oder polyvinylchloridhaltiges Material einzeln oder in Kombination und/oder Propf- und/oder Copolymerisate davon enthält oder daraus besteht.

## Claims

1. A method of manufacturing a fuel cell polymer electrolyte membrane electrode assembly containing a layered arrangement (1) of an anode electrode, a cathode electrode and, arranged therebetween, a polymer electrolyte membrane,
comprising the following steps:
a) manufacturing the polymer electrolyte membrane electrode assembly by joining the polymer electrolyte membrane and the cathode and anode electrodes together while a catalyst layer is applied on the membrane or electrode side and altogether the layered arrangement (1) is formed,
b) applying a polymer material (2) in the form of films to the upper and lower sides of the layered arrangement (1),
c) punching out and simultaneously fastening the film (2) at least partially at the outermost margin (3) of the layered arrangement (1),
d) heating and pressing marginal zones (4) of the film-coated layered arrangement (1), and the polymer material in the marginal zone softens or melts and penetrates the marginal zones (4) of the layered arrangement (1) .

2. A method according to claim 1, **characterized in that** the part of the unneeded, unheated film (2) is removed from the sheets of the layered arrangement (1) which are enclosed by the marginal zones (4).

3. A method according to claim 1, **characterized in that** the fastening of the film (2) is effected using high frequency.

4. A method according to claim 1, **characterized in that** a polymer material used contains or consists of polyethylene or polyethylene-containing material, polypropylene or polypropylene-containing material, polyester or polyester-containing material, polyamide or polyamide-containing material, ethylene-vinyl alcohol or material containing ethylene-vinyl alcohol, polyvinylidene chloride or material containing polyvinylidene chloride, polyvinyl chloride or material containing polyvinyl chloride, individually or in combination and or graft and/or copolymers thereof, as base material.

## Revendications

1. Procédé de préparation d'une unité d'électrodes à membrane électrolytique polymère pour une pile à combustible, contenant un agencement stratifié (1) à base d'une électrode anodique, d'une électrode cathodique et, agencée entre elles, d'une membrane électrolytique polymère,
comportant les étapes suivantes
a) préparation de l'unité d'électrodes à membrane électrolytique polymère par assemblage de la membrane électrolytique polymère et de l'électrode cathodique et de l'électrode anodique, une couche de catalyseur étant appliquée du côté membrane ou du côté électrodes, et l'ensemble de l'agencement stratifié (1) étant formé,
b) application d'une matière polymère (2) sous la forme de feuilles sur la face supérieure et la face inférieure de l'agencement stratifié (1),
c) matriçage et fixation simultanée de la feuille (2) au moins partiellement sur le bord externe (3) de l'agencement stratifié (1),
d) chauffage et pressage des zones de bord (4) de l'agencement stratifié revêtu de feuilles (1), la matière polymère se ramollissant ou fondant dans les zones de bord et passant à travers les zones de bord (4) de l'agencement stratifié.

2. Procédé suivant la revendication 1, **caractérisé en ce que** la partie de la feuille (2) non nécessaire, non chauffée, est éliminée des surfaces de l'agencement stratifié (1), entourées par les zones de bord (4).

3. Procédé suivant la revendication 1, **caractérisé en ce que** la fixation de la feuille (2) a lieu sous haute fréquence.

4. Procédé suivant la revendication 1, **caractérisé en ce qu'**on utilise une matière polymère qui, comme matière de base, contient ou est constituée de polyéthylène ou d'une matière contenant du polyéthylène, de polypropylène ou d'une matière contenant du polypropylène, de polyester ou d'une matière contenant du polyester, de polyamide ou d'une matière contenant du polyamide, d'éthylène-alcool vinylique ou d'une matière contenant de l'éthylène-alcool vinylique, de chlorure de polyvinylidène ou d'une matière contenant du chlorure de polyvinylidène, de chlorure de polyvinyle ou d'une matière contenant du chlorure de polyvinyle, isolément ou en combinaison, et/ou de polymères greffés et/ou copolymères de ceux-ci.
